# EUROPÄISCHE PATENTSCHRIFT

(11) **EP 0 527 825 B1**
(45) Veröffentlichungstag und Bekanntmachung des Hinweises auf die Patenterteilung: **13.07.1994**
(21) Anmeldenummer: 91908678.5
(22) Anmeldetag: 23.04.1991
(51) Int. Cl.: F16D 25/08

(54) **KUPPLUNG MIT ÖLGESCHMIERTEN LAMELLEN**
CLUTCH WITH OIL-LUBRICATED DISCS
EMBRAYAGE A DISQUES LUBRIFIES A L'HUILE

(30) Priorität: 28.04.1990 DE 4013805
(43) Veröffentlichungstag der Anmeldung: 24.02.1993
(73) Patentinhaber: ZF FRIEDRICHSHAFEN Aktiengesellschaft, 88038 Friedrichshafen (DE)
(72) Erfinder: BAUR, Erwin, D-7990 Friedrichshafen (DE); MÜLLER, Franz, D-7990 Friedrichshafen (DE)
(74) Vertreter: Raue, Reimund
(86) Internationale Anmeldenummer: EP9100784
(87) Internationale Veröffentlichungsnummer: WO9117371

(56) Entgegenhaltungen:
- WO-A-88/07144
- WO-A-90/09533
- DE-B- 1 153 265
- US-A- 4 466 524

## Beschreibung

Die Erfindung betrifft eine Kupplung mit den Merkmalen:
- erste und zweite Lamellen dienen als Reibglieder der Kupplung;
- die ersten Lamellen bilden Wellringfedern;
- eine erste axialfeste Stirnfläche stützt einen inneren Rand einer ringförmigen Schließfeder;
- ein äußerer Rand der Schließfeder drückt mit einer Federkraft gegen eine Druckscheibe und über die Druckscheibe die Lamellen gegen eine zweite axialfeste Stirnfläche und erzeugt damit ein Reibdrehmoment der Kupplung;
- eine Pedalkraft eines Pedals erzeugt über ein mechanisches Gestänge und wahlweise zusätzlich über ein hydrostatisches Gestänge eine Axialkraft der Druckscheibe entgegen der Federkraft der Schließfeder;
- die Schließfeder ist eine Tellerfeder;
- in einem Arbeitsweg der Schließfeder fällt die Federkraft mit steigendem Federweg von einer Größtkraft bei ganz geschlossener Kupplung auf eine Kleinstkraft bei weit geöffneter Kupplung.

Eine Kupplung dieser Art wird benutzt, wenn eine Trockenkupplung den geforderten Belastungen nicht mehr standhält, beispielsweise als Hauptkupplung für einen Motor mit großem Drehmoment und großer Leistung in einem Fahrzeug, das oft in schwierigem Gelände rangieren muß. Während jedoch eine Trockenkupplung nur einen geringen Lüftweg (über den vollständigen Abbau der Axialkraft der Druckscheibe hinaus) benötigt, weil sie die großen Reibwerte von Trockenreibpaarungen ausnutzen kann und nur zwei oder höchstens vier Reibspalte nur geringfügig öffnen muß, um das Reibdrehmoment Null werden zu lassen, muß eine Kupplung mit ölgeschmierten Lamellen dieser Art mit viel geringeren Reibwerten, viel mehr Reibspalten und viel größerem Lüftweg arbeiten, weil jeder Reibspalt viel weiter geöffnet werden muß, damit der Ölfilm keine Reibspalte überbrücken und ein großes Schleppdrehmoment erzeugen kann. Es ist daher üblich, mit dem Pedal eine Fremdkraft zum Öffnen (und Schließen) der Kupplung zu steuern oder die Pedalkraft mit einer Hilfskraft (Öldruck, Luftdruck oder Vakuum) zu unterstützen derart, daß im Notfall auch noch eine übergroße Pedalkraft die Kupplung öffnen kann.

Bei einer bekannten Kupplung dieser Art (EP 02 55 614 A2) wird außer dem hydrostatischen Gestänge ein Ölkreislauf mit Ölbehälter, Ölpumpe, Druckventil und Wegeventil, ein zweiter Ringkolben in dem Nehmerzylinder des hydrostatischen Gestänges mit eigener Ölzuleitung durch die Welle sowie ein elektrischer Stromkreis mit Schalter und Schaltmagnet benötigt, um die Pedalkraft und -arbeit in Grenzen zu halten und ein feinfühliges Betätigen der Kupplung zu erreichen.

Die ältere, nicht vorveröffentlichte internationale Patentanmeldung WO 90/09533 befaßt sich mit einer Kupplungseinrichtung, mit der ein feinfühliges Ein- und Ausrücken der Kupplung bei geringen Pedalkräften möglich ist. Ein Druckstück der Kupplung ist gegen die Kraft einer Tellerfeder im Öffnungssinne der Kupplung verschiebbar. Das Druckstück weist eine Formgebung auf, die im Zusammenwirken mit der Federkennlinie einen definierten Verlauf der am Kupplungspedal aufzubringenden Pedalkraft ermöglicht. Vorzugsweise ist die aufzubringende Pedalkraft - bezogen auf den Weg des Kupplungspedals - im wesentlichen konstant bleibend.

Der Erfindung liegt die Aufgabe zugrunde, diesen Aufwand zu verringern und mit einfachen, kleinbauenden Mitteln auch noch eine sehr große Kupplung der eingangs beschriebenen Art allein mit der Pedalkraft zu betätigen und bei einer noch größeren Kupplung wenigstens im Notfall ohne Fremdenergie auszukommen.

Diese Aufgabe wird mit den Merkmalen nach Anspruch 1 gelöst, weil die Federkraft der Lamellen der Federkraft der Schließfeder in dem kritischen ersten Teil des Arbeitsweges entgegenwirkt und die Größtkraft der Schließfeder nur innerhalb der Kupplung, aber nicht mehr in dem Gestänge zwischen der Druckscheibe und dem Pedal, wirksam wird. Bei etwa gleichbleibender Pedalkraft ist in diesem ersten Teil des Arbeitsweges der Schließfeder und damit auch in dem ersten Teil des Pedalweges im wesentlichen allein die Stellung des Pedals ein Maß für das Reibdrehmoment der (rutschenden) Kupplung. Die Pedalkraft ist dabei nie größer als dies bei einer mittleren Federkraft der Schließfeder in deren Arbeitsweg der Fall ist.

Außerdem bleibt die Pedalkraft auch noch in dem zweiten Teil des Arbeitsweges der Schließfeder und damit auch in dem zweiten Teil des Pedalweges gleich, wenn, ausgehend von der spielfrei geöffneten Kupplung, die Reibspalte zwichen den Lamellen so weit geöffnet werden, bis kein Ölfilm mehr die Reibspalte überbrücken kann.

Mit den Merkmalen nach Anspruch 2 ist die Anzahl der Bauteile und damit der Aufwand für den Zusammenbau und das Zerlegen der Kupplung besonders gering.

Mit den Merkmalen nach Anspruch 3 können billige, handelsübliche Tellerfedern als Pufferfedern verwendet werden, und der äußere Ring der Druckscheibe ist ein einfaches Drehteil.

Mit dem Merkmal nach Anspruch 4 wird ein Leerweg des Ringkolbens des Nehmerzylinders des hydrostatischen Gestänges und damit ein Zeitverlust beim Ausrücken der Kupplung vermieden.

Mit dem Merkmal nach Anspruch 5 wird ein besonders guter Ausgleich zwischen den zwei Forderungen nach möglichst feinfühliger Dosierung des Reibdrehmomentes der rutschenden Kuppung und nach möglichst vollständigem Vermeiden eines Schleppdrehmomentes der offenen Kupplung erreicht.

Mit dem Merkmal nach Anspruch 6 können die Federkraft und der Federweg der ersten Lamellen nach Bedarf ergänzt oder auch ersetzt werden.

Die Zeichnung zeigt zwei Ausführungsbeispiele nach der Erfindung, jeweils als Ausschnitt aus einem Längsschnitt. Es zeigen:
- Fig. 1: eine Kupplung mit den Merkmalen nach Anspruch 3 und
- Fig. 2: eine Kupplung mit den Merkmalen nach Anspruch 4.

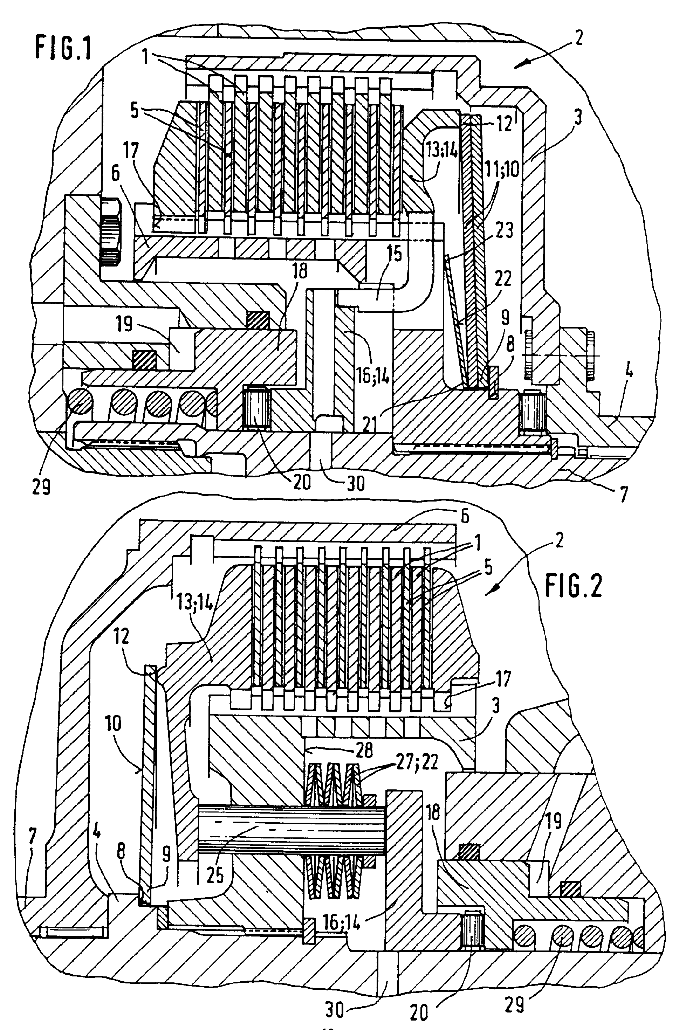

Fig. 1: Erste Lamellen 1 der Kupplung 2 sind über einen ersten Lamellenträger 3 mit einer ersten Welle 4 drehfest und axial beweglich verbunden. Die ersten Lamellen 1 bilden Wellringfedern. Zweite Lamellen 5 sind über einen zweiten Lamellenträger 6 mit einer zweiten Welle 7 drehfest und axial beweglich verbunden.

Eine erste Stirnfläche 8 des zweiten Lamellenträgers 6 stützt einen inneren Rand 9 einer ringförmigen Schließfeder 10. Die Schließfeder 10 besteht aus zwei parallel geschichteten Tellerfedern 11. Ein äußerer Rand 12 der Schließfeder 10 drückt in einem ersten Teil eines Arbeitsweges der Schließfeder 10 mit einer Federkraft gegen einen äußeren Ring 13 einer Druckscheibe 14 und über den äußeren Ring 13 der Druckscheibe 14 die Lamellen 1, 5 gegen eine zweite Stirnfläche 17 des zweiten Lamellenträgers 6 und erzeugt damit ein Reibdrehmoment der Kupplung 2. Die Druckscheibe 14 besteht aus dem äußeren Ring 13 mit Lappen 15 und einem inneren Ring 16. Die Lappen 15 stützen den äußeren Ring 13 axial durch den zweiten Lamellenträger 6 hindurch gegen den inneren Ring 16.

Eine Pedalkraft eines nicht gezeigten Pedals erzeugt, über ein nicht gezeigtes mechanisches Gestänge, über ein nur teilweise gezeigtes hydrostatisches Gestänge mit einem Ringkolben 18 in einem Nehmerzylinder 19, über ein Axiallager 20 und über den inneren Ring 16 auf den äußeren Ring 13 wirkend, eine Axialkraft der Druckscheibe 14 entgegen der Federkraft der Schließfeder 10.

Die erste Stirnfläche 8 des zweiten Lamellenträgers 6 stützt über den inneren Rand 9 der Schließfeder 10 auch einen inneren Rand 21 einer ringförmigen Pufferfeder 22. Die Pufferfeder 22 ist eine Tellerfeder. Ein äußerer Rand 23 der Pufferfeder 22 drückt in einem zweiten Teil des Arbeitsweges der Schließfeder 10 gemeinsam mit der Schließfeder 10 gegen den äußeren Ring 13 der Druckscheibe 14.

Fig. 2: Erste Lamellen 1 der Kupplung 2 sind über einen ersten Lamellenträger 3 mit einer ersten Welle 4 drehfest und axial beweglich verbunden. Die ersten Lamellen 1 bilden Wellringfedern. Zweite Lamellen 5 sind über eine zweiten Lamellenträger 6 mit einer zweiten Welle 7 drehfest und axial beweglich verbunden. Eine erste Stirnfläche 8 an der axialfesten Welle 4 stützt einen inneren Rand 9 einer ringförmigen Schließfeder 10. Die Schließfeder 10 ist eine Tellerfeder. Ein äußerer Rand 12 der Schließfeder 10 drückt in einem ersten Teil eines Arbeitsweges der Schließfeder 10 mit einer Federkraft gegen einen äußeren Ring 13 einer Druckscheibe 14 und über den äußeren Ring 13 der Druckscheibe 14 die Lamellen 1, 5 gegen eine zweite Stirnfläche 17 an dem axialfesten ersten Lamellenträger 3 und erzeugt damit ein Reibdrehmoment der Kupplung 2. Die Druckscheibe 14 besteht aus dem äußeren Ring 13 und einem inneren Ring 16. Bolzen 25 stützen axial durch den ersten Lamellenträger 3 hindurch den äußeren Ring 13 gegen den inneren Ring 16.

Eine Pedalkraft eines nicht gezeigten Pedals erzeugt, über ein nicht gezeigtes mechanisches Gestänge, über ein nur teilweise gezeigtes hydrostatisches Gestänge mit einem Ringkolben 18 in einem Nehmerzylinder 19, über ein Axiallager 20, über den inneren Ring 16 und über die Bolzen 25 auf den äußeren Ring 13 wirkend, eine Axialkraft der Druckscheibe 14 entgegen der Federkraft der Schließfeder 10.

Eine weitere Stirnfläche 28 des ersten Lamellenträgers 3 stützt geschichtete Tellerfedern 27 auf den Bolzen 25. Die Tellerfedern 27 bilden gemeinsam eine Pufferfeder 22. Die Pufferfeder 22 drückt in einem zweiten Teil des Arbeitsweges der Schließfeder 10 gemeinsam mit der Schließfeder 10 gegen die Druckscheibe 14.

Fig. 1 und 2: In dem Arbeitsweg der Schließfeder 10 fällt ihre Federkraft mit steigendem Federweg von einer Größtkraft bei ganz geschlossener Kupplung 2 auf eine Kleinstkraft bei weit geöffneter Kupplung 2. In dem ersten Teil des Arbeitsweges, ausgehend von der ganz geschlossenen bis zu der spielfrei geöffneten Kupplung 2, wirkt die Federkraft der ersten Lamellen 1 der Federkraft der Schließfeder 10 derart entgegen, daß die Summe der Federkräfte im wesentlichen gleich bleibt. In dem zweiten Teil des Arbeitsweges, ausgehend von der spielfrei geöffneten bis zu der weit geöffneten Kupplung 2, wirkt die Federkraft der Pufferfeder 22 derart gemeinsam mit der Federkraft der Schließfeder 10, daß die Summe der Federkräfte auch in diesem Teil des Arbeitsweges der Schließfeder 10 im wesentlichen gleich bleibt.

Weil der äußere Rand 12 der Schließfeder 10 über das hydrostatisch-mechanische Gestänge im wesentlichen starr mit dem Pedal verbunden ist, bleibt auch die Pedalkraft von der ganz geschlossenen bis zu der weit geöffneten Kupplung 2 im wesentlichen gleich, und nur die Stellung des Pedals ist in dem ersten Teil des Arheitsweges der Schließfeder 10 ein Maß für das Reibdrehmoment der Kupplung 2 und in dem zweiten Teil des Arbeitsweges ein Maß für die Größe der Reibspalte zwischen den Lamellen 1, 5. Bei der weit geöffneten Kupplung 2 verhindert die Größe der Reibspalte, daß ein Ölfilm einen Reibspalt überbrückt und die Kupplung 2 noch ein störendes Schleppdrehmoment erzeugt.

Die Federkraft und der Federweg der als Wellringfedern ausgebildeten ersten Lamellen 1 können ergänzt oder ersetzt werden durch mindestens eine Ringfeder, die nicht als Lamelle dient und an irgendeiner Stelle axial zwischen dem äußeren Ring 13 der Druckscheibe 14 und der zweiten axialfesten Stirnfläche 17 angeordnet ist.

Eine Ölleitung 30 zur Schmierung und Kühlung der Lamellen 1, 5 kann in bekannter Weise so gesteuert werden, daß sie im wesentlichen nur bei schließender und geschlossener Kupplung 2 offen und bei geöffneter Kupplung 2 geschlossen ist.

Ein teilweise hydrostatisches Gestänge ist vorteilhaft, wenn man das Pedal an einem kippbaren Fahrerhaus aufhängen will, und es bietet sich besonders an, wenn man die Pedalkraft durch eine Hilfskraft unterstützen will oder muß. Andernfalls kann das hydrostatisch-mechanische Gestänge auch durch ein rein mechanisches Gestänge, beispielsweise mit Schiebegabel und Schiebemuffe, ersetzt werden.

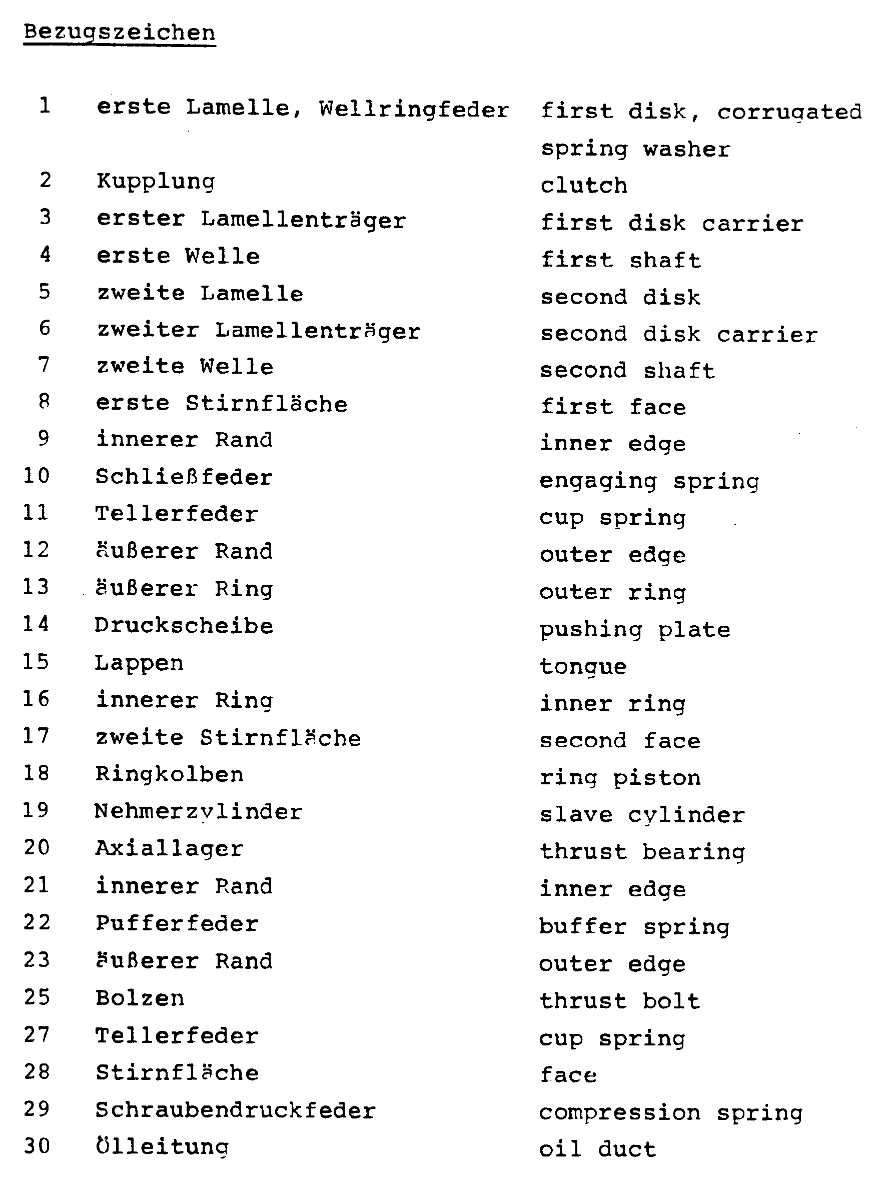

## Patentansprüche

1. Kupplung mit den Merkmalen:
- erste und zweite Lamellen (1, 5) dienen als Reibglieder der Kupplung (2);
- die ersten Lamellen (1) bilden Wellringfedern;
- eine erste axialfeste Stirnfläche (8) stützt einen inneren Rand (9) einer ringförmigen Schließfeder (10);
- ein äußerer Rand (12) der Schließfeder (10) drückt mit einer Federkraft gegen eine Druckscheibe (14) und über die Druckscheibe (14) die Lamellen (1, 5) gegen eine zweite axialfeste Stirnfläche (17) und erzeugt damit ein Reibdrehmoment der Kupplung (2);
- eine Pedalkraft eines Pedals erzeugt über ein mechanisches Gestänge und wahlweise zusätzlich über ein hydrostatisches Gestänge eine Axialkraft der Druckscheibe (14) entgegen der Federkraft der Schließfeder (10);
- die Schließfeder (10) ist eine Tellerfeder (11);
- in einem Arbeitsweg der Schließfeder (10) fällt die Federkraft mit steigendem Federweg von einer Größtkraft bei ganz geschlossener Kupplung (2) auf eine Kleinstkraft bei weit geöffneter Kupplung (2),
**gekennzeichnet** durch die Merkmale:
- in einem ersten Teil des Arbeitsweges, ausgehend von der ganz geschlossenen bis zu der spielfrei geöffneten Kupplung (2), wirkt eine Federkraft der ersten Lamellen (1) der Federkraft der Schließfeder (10) entgegen derart, daß die Summe aller Federkräfte, die während des Kupplungsvorgangs in dem ersten Teil des Arbeitsweges wirksam sind, im wesentlichen gleich bleibt;
- in einem zweiten Teil des Arbeitsweges wirkt eine Federkraft einer Pufferfeder (22) gemeinsam mit der Federkraft der Schließfeder (10) derart, daß die Summe aller Federkräfte, die während des Kupplungsvorgangs auch in dem zweiten Teil des Arbeitsweges wirksam sind, ausgehend von der spielfrei geöffneten bis zu der weit geöffneten Kupplung (2), im wesentlichen gleich bleibt.

2. Kupplung nach Anspruch 1 mit den Merkmalen:
- die Druckscheibe (14) besteht aus einem äußeren Ring (13) und einem inneren Ring (16);
- der äußere Ring (13) greift mit Lappen (15) axial durch einen Lamellenträger (6) der Kupplung (2) hindurch;
- ein Ringkolben (18) eines Nehmerzylinders (19) des hydrostatischen Gestänges drückt über ein Axiallager (20) gegen den inneren Ring (16) und über die Lappen (15) gegen den äußeren Ring (13) der Druckscheibe (14);
- eine Tellerfeder bildet die Pufferfeder (22);
- die erste Stirnfläche (8) stützt auch einen inneren Rand (21) der Pufferfeder (22);
- ein äußerer Rand (23) der Pufferfeder (22) drückt in den zweiten Teil des Arbeitsweges der Schließfeder (10) gemeinsam mit dem äußeren Rand (12) der Schließfeder (19) gegen den äußeren Ring (13) der Druckscheibe (14).

3. Kupplung nach Anspruch 1 mit den Merkmalen:
- die Druckscheibe (14) besteht aus einem äußeren Ring (13) und einem inneren Ring (16);
- ein Ringkolben (18) eines Nehmerzylinders (19) des hydrostatischen Gestänges drückt über ein Axiallager (20) gegen den inneren Ring (16) und über Bolzen (20) axial durch einen Lamellenträger (3) hindurch gegen den äußeren Ring (13) der Druckscheibe (14);
- geschichtete Tellerfedern (27) sind auf den Bolzen (20) geführt und bilden gemeinsam die Pufferfedern (22);
- die Tellerfedern (27) sind gegen eine Stirnfläche (28) des Lamellenträgers (3) gestützt und drücken in dem zweiten Teil des Arbeitsweges der Schließfeder (10) gegen den inneren Ring (16) in der gleichen Richtung wie der äußere Rand (12) der Schließfeder (10) gegen den äußeren Ring (13) der Druckscheibe (14).

4. Kupplung nach Anspruch 2 oder 3 mit dem Merkmal:
Eine Schraubendruckfeder (29) hinter dem Ringkolben (18) hält das Axiallager (20) spielfrei.

5. Kupplung nach Anspruch 1 mit dem Merkmal:
Der erste und zweite Teil bilden im wesentlichen je eine Hälfte des Arbeitsweges der Schließfeder (10).

6. Kupplung nach Anspruch 1 mit dem Merkmal:
Zwischen dem äußeren Rand (12) der Schließfeder (10) und der zweiten axialfesten Stirnfläche (17) ist eine Ringfeder angeordnet.

## Claims

1. Clutch having the features:
- first and second disks (1, 5) serve as friction members of the clutch (2);
- the first disks (1) form corrugated annular springs;
- a first, axially fixed end face (8) supports an inner edge (9) of an annular closing spring (10);
- an outer edge (12) of the closing spring (10) presses with a spring force against a pressure disk (14) and via the pressure disk (14) presses the disks (1, 5) towards a second, axially fixed end face (17) and thereby generates a friction torque of the clutch (2);
- a pedal force of a pedal, via a mechanical linkage and optionally additionally via a hydrostatic linkage, generates a thrust force of the pressure disk (14) counter to the spring force of the closing spring (10);
- the closing spring (10) is a disk spring (11);
- in a working stroke of the closing spring (10) the spring force drops, as spring excursion increases, from a maximum force when the clutch (2) is fully closed to a minimum force when the clutch (2) is wide open,
characterized by the features:
- in a first part of the working stroke, from the fully closed clutch to the clutch (2) open without play, a spring force of the first disks (1) counteracts the spring force of the closing spring (10) in such a way that the sum of all of the spring forces, which are effective during the coupling process in the first part of the working stroke, remains substantially constant;
- in a second part of the working stroke, a spring force of a cushioning spring (22) acts jointly with the spring force of the closing spring (10) in such a way that the sum of all of the spring forces, which are effective during the coupling process also in the second working stroke, from the clutch open without play to the wide open clutch (2), remains substantially constant.

2. Clutch according to claim 1, having the features:
- the pressure disk (14) comprises an outer ring (13) and an inner ring (16);
- the outer ring (13) engages with lugs (15) axially through a disk carrier (6) of the clutch (2);
- an annular piston (18) of a slave cylinder (19) of the hydrostatic linkage presses via a thrust bearing (20) against the inner ring (16) and via the lugs (15) against the outer ring (13) of the pressure disk (14);
- a disk spring forms the cushioning spring (22);
- the first end face (8) also supports an inner edge (21) of the cushioning spring (22);
- an outer edge (23) of the cushioning spring (22), in the second part of the working stroke of the closing spring (10), presses jointly with the outer edge (12) of the closing spring (10) against the outer ring (13) of the pressure disk (14).

3. Clutch according to claim 1, having the features:
- the pressure disk (14) comprises an outer ring (13) and an inner ring (16);
- an annular piston (18) of a slave cylinder (19) of the hydrostatic linkage presses via a thrust bearing (20) against the inner ring (16) and via pins (25) axially through a disk carrier (3) against the outer ring (13) of the pressure disk (14);
- layered disk springs (27) are guided on the pins (25) and jointly form the cushioning springs (22);
- the disk springs (27) are supported against an end face (28) of the disk carrier (3) and, in the second part of the working stroke of the closing spring (10), press against the inner ring (16) in the same direction as the outer edge (12) of the closing spring (10) presses against the outer ring (13) of the pressure disk (14).

4. Clutch according to claim 2 or 3, having the feature: a helical compression spring (29) behind the annular piston (18) holds the thrust bearing (20) free of play.

5. Clutch according to claim 1, having the feature: the first and second part each represent substantially one half of the working stroke of the closing spring (10).

6. Clutch according to claim 1, having the feature: an annular spring is disposed between the outer edge (12) of the closing spring (10) and the second, axially fixed end face (17).

## Revendications

1. Embrayage dans lequel :
- des premiers et des seconds disques (1, 5) servent d'éléments de friction de l'embrayage (2);
- les premiers disques (1) constituent des ressorts annulaires ondulés;
- une première surface frontale fixe axialement (8) épaule un bord intérieur (9) d'un ressort annulaire de fermeture (10);
- un bord extérieur (12) du ressort de fermeture (10) pousse élastiquement un plateau de pression (14) et, par ce plateau (14), les disques (1, 5) contre une seconde surface frontale fixe axialement (17) et provoque ainsi un couple de friction de l'embrayage (2);
- une force d'une pédale engendre, par l'intermédiaire d'une timonerie mécanique et en outre sélectivement par l'intermédiaire d'une timonerie hydrostatique, une force axiale sur le plateau de pression (14) dans le sens opposé à la poussée élastique du ressort de fermeture (10);
- le ressort de fermeture (10) est un ressort à diaphragme (11);
- dans une course de travail du ressort de fermeture (10), la force du ressort diminue quand la course augmente, d'une force maximale quand l'embrayage (2) est complètement fermé à une force minimale quand l'embrayage (2) est largement ouvert,
**caractérisé** en ce que :
- dans une première partie de la course de travail, d'une position où l'embrayage (2) est complètement fermé à une position où il est ouvert sans jeu, une force élastique des premiers disques (1) agit dans le sens opposé à la force élastique du ressort de fermeture (10) de telle manière que la somme de toutes les forces élastiques agissant dans la première partie de la course de travail pendant le processus d'embrayage reste sensiblement la même;
- dans une seconde partie de la course de travail, une force élastique d'un ressort tampon (22) agit en commun avec la force élastique du ressort de fermeture (10) de telle manière que la somme de toutes les forces élastiques agissant dans la seconde partie de la course de travail pendant le processus d'embrayage, à partir de la position où l'embrayage (2) est ouvert sans jeu jusqu'à celle où il est largement ouvert, reste sensiblement la même.

2. Embrayage selon la revendication 1, dans lequel :
- le plateau de pression (14) comporte un anneau extérieur (13) et un anneau intérieur (16);
- l'anneau extérieur (13) comporte des pattes (15) qui sont engagées axialement à travers un porte-disques (6) de l'embrayage (2);
- un piston annulaire (18) d'un cylindre récepteur (19) de la timonerie hydrostatique pousse l'anneau intérieur (16) par l'intermédiaire d'un palier de butée (20) et l'anneau extérieur (13) du plateau de pression (14) par l'intermédiaire des pattes (15);
- le ressort tampon (22) est formé par un ressort Belleville;
- la première surface frontale (8) épaule aussi un bord intérieur (21) du ressort tampon (22);
- un bord extérieur (23) du ressor tampon (22), dans la deuxième partie de la course de travail du ressort de fermeture (10), exerce une pression en commun avec le bord extérieur (12) du ressort de fermeture (10) contre l'anneau extérieur (13) du plateau de pression (14).

3. Embrayage selon la revendication 1, dans lequel :
- le plateau de pression (14) comporte un anneau extérieur (13) et un anneau intérieur (16);
- un piston annulaire (18) d'un cylindre récepteur (19) de la timonerie hydrostatique pousse l'anneau intérieur (16) par l'intermédiaire d'un palier de butée (20) et, par l'intermédiaire de goujons (20) traversant axialement un porte-disques (3), l'anneau extérieur (13) du plateau de pression (14);
- des ressorts Belleville empilés (27) sont montés sur les goujons (20) et constituent ensemble les ressorts tampons (22);
- lesdits ressorts Belleville (27) sont appuyés contre une surface frontale (28) du porte-disques (3) et poussent, dans la deuxième partie de la course de travail du ressort de fermeture (10), l'anneau intérieur (16) dans le même sens dans lequel le bord extérieur (12) du ressort de fermeture (10) pousse l'anneau extérieur (13) du plateau de pression (14).

4. Embrayage selon la revendication 2 ou 3, dans lequel : un ressort hélicoïdal de compression (29) disposé derrière le piston annulaire (18) maintient sans jeu le palier de butée (20).

5. Embrayage selon la revendication 1, dans lequel : la première et la seconde partie constituent chacune sensiblement une moitié de la course de travail du ressort de fermeture (10).

6. Embrayage selon la revendication 1, dans lequel : un ressort annulaire est disposé entre le bord extérieur (12) du ressort de fermeture (10) et la seconde surface frontale fixe axialement (17).
